# EUROPÄISCHE PATENTSCHRIFT

(11) **EP 2 269 477 B1**
(45) Veröffentlichungstag und Bekanntmachung des Hinweises auf die Patenterteilung: **08.10.2014**
(21) Anmeldenummer: 10006483.1
(22) Anmeldetag: 22.06.2010
(51) Int. Cl.: A41D 31/02, B01D 69/04, B01D 69/12, B01D 69/14, B01D 71/02, B01D 71/06, B01D 71/48, B32B 5/26, B32B 7/12, B32B 27/12, B32B 27/36

(54) **Wasserdichte und wasserdampfdurchlässige Membran**
Waterproof and water vapour-porous membrane
Membrane étanche et laissant passer la vapeur d'eau

(30) Priorität: 02.07.2009 DE 202009009176 U
(43) Veröffentlichungstag der Anmeldung: 05.01.2011
(73) Patentinhaber: X-Technology Swiss GmbH, 8832 Wollerau (CH)
(72) Erfinder: Lambertz, Bodo w., Prof., 8808 Pfäffikon (CH)
(74) Vertreter: Tarvenkorn, Oliver

(56) Entgegenhaltungen:
- EP-A1- 1 277 868
- WO-A2-2008/073192
- US-A1- 2004 116 028
- US-A1- 2008 070 463
- US-A1- 2009 186 548

## Beschreibung

Die Erfindung betrifft ein Bekleidungsstück mit einer wasserdichten und wasserdampfdurchlässigen Membran mit den Merkmalen des Oberbegriffs des Anspruchs 1.

Für Bekleidungsstücke verwendete wasserdichte Materialien haben in der Vergangenheit den großen Nachteil aufgewiesen, dass sie auch für Wasserdampf undurchlässig waren, sodass die vom Körper produzierte Feuchtigkeit in Form von Schweiß, der einen wichtigen Mechanismus zur Temperaturregulierung des Körpers darstellt, nicht oder lediglich unzureichend abgeführt werden konnte. Der Mangel an Schweißabfuhr führt zu einer Kondensatbildung an der Innenseite des Bekleidungsstücks, sodass dieses nass ist und dem Träger ein unangenehmes Gefühl vermittelt. Die Verwendung von atmungsaktiven Stoffen hat zwar in der Regel die Verdunstung des anfallenden Schweißes ermöglicht; gleichzeitig waren diese Bekleidungsstücke jedoch nicht in der Lage, Wasser von der Haut fernzuhalten, da sie nicht gleichzeitig wasserdicht und atmungsaktiv waren.

Zur Beseitigung dieses Nachteils wurden Membranen entwickelt, die mit Textilien dauerhaft und flexibel verklebt bzw. auflaminiert werden. Das dadurch entstehen de Verbundmaterial weist eine mikroporöse, luftdurchlässige Schicht auf, die wasserdampfdurchlässig ist. Man unterscheidet zwischen Membranen, die Poren aufweisen (z.B. "Gore-Tex ®") Membranen, die ohne Poren auskommen (z.B. "Sympatex ®"). Die Membranen sind dicht gegen Wasser und Wind; Körperfeuchtigkeit kann jedoch in Form von Wasserdampf durch die Membran hindurchtreten / diffundieren. Die Membran ist folglich atmungsaktiv.

Die Diffusion des Wasserdampfes durch die Membran erfolgt durch den Druckunterschied zwischen der unter der Bekleidung herrschenden Temperatur und der Umgebungstemperatur. Soweit die Temperatur unter dem Bekleidungsstück deutlich größer als die Umgebungstemperatur ist, erfolgt aufgrund des Bedürfnisses der Natur, ein Gleichgewicht herzustellen, ein Druckausgleich durch die Membran, bei der der Wasserdampf nach außen abgeführt wird.

Bei den bekannten Bekleidungsstücken erfolgt über die gesamte Fläche der Membran eine gleichmäßige Diffusion des Wasserdampfes. Folglich besteht nur durch Verwendung unterschiedlicher Membranen innerhalb eines Bekleidungsstücks die Möglichkeit, unterschiedliche Diffusionseigenschaften innerhalb der Membran zu realisieren. Durch die somit erforderliche Kombination verschiedener Membrane ist die Herstellung eines damit versehenen Bekleidungsstücks aufwendig und damit teuer.

A Bekleidungsstück nach dem Stand der Technik is in dem Dokument WO 2008/073192 offenbar.

Hier will die Erfindung Abhilfe schaffen. Der Erfindung liegt die Aufgabe zugrunde, ein Bekleidungsstück mit eienre wasserdichten und wasserdampfdurchlässigen Membran bereitzustellen, die ohne Kombination verschiedener Membranen und in Abhängigkeit von den Anforderungen Bereiche unterschiedlicher Diffusionseigenschaften bereitstellt. Gemäß der Erfindung wird diese Aufgabe durch ein Bekldiungsstück mit den Merkmalen des Patentanspruchs 1 gelöst.

Mit der Erfindung ist ein Bekleidungsstück mit einer wasserdichten und wasserdampfdurchlässigen Membran geschaffen, welche Bereiche unterschiedlicher Diffusionseigenschaften bereitstellt, ohne dabei unterschiedliche Membranen miteinander kombinieren zu müssen. Auf diese Weise ist es möglich, die Membran auf die jeweiligen Bedürfnisse anzupassen. dazu ist im Bereich stärkeren Schweißanfalls ein Abschnitt mit verbesserten Diffusionseigenschaften angeordnet; die benachbarten Abschnitte sind jedoch nur mit üblichen, geringeren Diffusionseigenschaften versehen.

Andere Weiterbildungen und Ausgestaltungen der Erfindung sind in den übrigen Unteransprüchen angegeben. Ein Ausführungsbeispiel der Erfindung ist in der Zeichnung dargestellt und wird nachfolgend im Einzelnen beschrieben. Es zeigen:
- Fig. 1: die perspektivische Darstellung der Lagen eines mehrschichtigen, wasserdichten und wasserdampfdurchlässigen Materials;
- Fig. 2: die Draufsicht auf eine Membran-Folie mit aufgebrachten Nano-Fasern;
- Fig. 3: die Draufsicht auf eine Membran-Folie mit aufgebrachten Nano-Fa- sern in anderer Ausbildung und
- Fig. 4: den Schnitt durch eine erfindungsgemäße Membran.

Als Ausführungsbeispiel ist ein wasserdichtes und wasserdampfdurchlässiges Material zur Verwendung in einem Kleidungsstück dargestellt, das mehrschichtig aufgebaut ist. Es besteht aus einem Obermaterial 1, das in Abhängigkeit vom Einsatzbereich frei wählbar ist. Es kann sich hierbei beispielsweise um jedes für Bekleidungsstücke geeignete Material handeln. Unter dem Obermaterial 1 ist eine Membran 2 angeordnet; unter der Membran 2 ein Futterstoff 3, der die Innenseite des jeweiligen Bekleidungsstücks bildet. Als Futterstoff kann jegliche Art von Materialien, die in der Textilwirtschaft Anwendung finden, verwendet werden. Bevorzugt sind hier selbstverständlich Materialien, die einen angenehmen Tragekomfort auf der Haut beinhalten. Die Membran 2 ist mit dem Obermaterial 1 sowie dem Futterstoff 3 dauerhaft und flexibel verbunden.

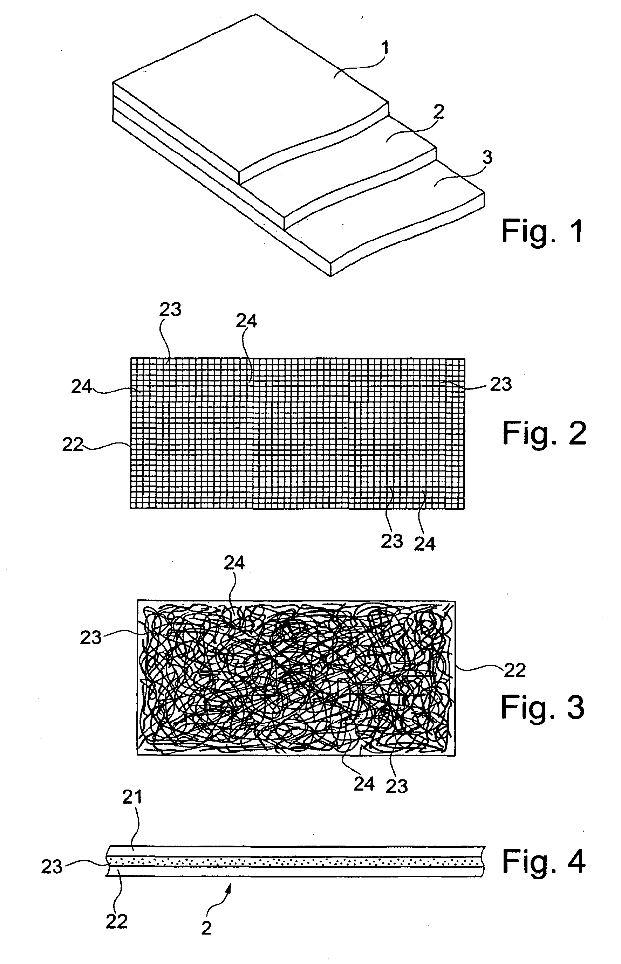

Die Membran 2 ist mehrlagig ausgebildet (Figur 2). Sie besteht aus einer ersten Membran-Folie 21, die auf der dem Obermaterial 1 zugewandten Seite angeordnet ist, und einer zweiten Membran-Folie 22, die auf der dem Futterstoff 3 zugewandten Seite angeordnet ist.

Im Ausführungsbeispiel handelt es sich bei den Membran-Folien 21 und 22 um porenlose, hydrophobe Folien aus Polyester, in die hydrophile Molekülbausteine integriert sind. Die Folien sind daher wind- und wasserdicht, ermöglichen gleichzeitig jedoch eine Diffusion von Wasserdampf, sodass Körperfeuchtigkeit durch die Membran 2 hindurchtreten kann. In Abwandlung des Ausführungsbeispiels können auch mit Poren versehene Membran-Folien Anwendung finden.

Zwischen den Membran-Folien 21 und 22 sind Fasern 23 angeordnet. Bei den Fasern 23 handelt es sich um Nanofasern, die einen außerordentlich kleinen Durchmesser haben, der etwa 200 bis 500 mal kleiner ist als das menschliche Haar. Vorzugsweise weisen die Fasern einen Durchmesser von 50 Nanometern auf. Die Nano-Fasern bestehen aus Kohlenstoff; es handelt sich um eine Karbonfaser. Es besteht jedoch auch die Möglichkeit, Nanofasern auf der Basis von Polymerwerkstoffen, Metallen, Metalloxiden, Keramiken oder Glas zu verwenden.

Zwischen den Nano-Fasern 23 sind Lücken 24 ausgebildet. Die Anzahl und Größe der Lücken 24 richtet sich nach der Anzahl und Dichte der Fasern 23. Je dichter die Fasern 23 zu einander angeordnet sind, desto kleiner sind die Abmessungen der Lücken 24. Ebenso ist durch die Erhöhung der Anzahl an Fasern 23 die Anzahl der Lücken 24 einstellbar. Durch die Einstellbarkeit der Anzahl und Größe der Lücken 24 sind die Diffusionseigenschaften der Membran 2 einstellbar. Je mehr Fasern 23 zwischen den Membran-Folien 21 und 22 angeordnet sind, desto geringer sind die Diffusionseigenschaften. Im umgekehrten Fall, in dem weniger Fasern 23 zwischen den Membran-Folien 21 und 22 angeordnet sind, ergeben sich verbesserte Diffusionseigenschaften. Entsprechend weist das Ausführungsbeispiel nach Figur 2 geringere Diffusionseigenschaften auf als das Ausführungsbeispiel nach Figur 3, da bei diesem die Lücken 24 größer sind als in Figur 2.

Bei der Herstellung des Materials werden zunächst auf die erste Membran-Folie 21 Nanofasern 23 aufgebracht. Dies kann durch Einspinnen der Fasern 23 erfolgen. Auch ein Aufstreuen der Fasern 23 ist möglich. Die Art der Aufbringung der Nanofasern 23 hängt unter anderem von der Länge der Fasern ab. Kurze Fasern, wie sie beispielsweise in Figur 3 dargestellt sind, können in einfacher Weise aufgestreut werden, wohingegen sich lange Fasern 21 (Figur 2) eher zum Einspinnen der Fasern eignen. Beim Aufstreuen der Fasern ergibt sich ein eher unregelmäßiges Bild, wohingegen beim Einspinnen oder Auftragen der Fasern 23 auf die Folie 21 ein regelmäßiges Bild ergibt.

Auf die auf der ersten Membran-Folie 21 befindlichen Fasern 23 wird zum Abschluss des Aufbringens der Fasern 23 die zweite Membran-Folie 22 aufgebracht. Die Membran-Folien 21 und 22 werden im Anschluss mit den dazwischen befindlichen Fasern 23 nicht lösbar verbunden; die Folien 21 und 22 werden laminiert, wodurch die Membran 2 hergestellt wird. Die so erstellte Membran 2 wird mit dem Obermaterial 1 sowie dem Futterstoff 3 dauerhaft und flexibel verklebt, so dass das für das Bekleidungsstück vorgesehene Material fertiggestellt ist.

Mit der erfindungsgemäßen Membran ist die Möglichkeit geschaffen, die Diffusionseigenschaften der Membran 2 zu verändern. Durch die Anordnung einer sehr hohen Anzahl an Fasern 23 verringern sich die Diffusionseigenschaften der Membran 2. Dies ergibt sich daraus, dass die Dichte an Fasern 23 erhöht ist, wodurch die Größe der Lücken 24 insgesamt verringert ist. Im Gegensatz dazu ist bei einer Verringerung der Dichte der Fasern 23 die von den Lücken 24 gebildete Fläche insgesamt vergrößert, wodurch sich erhöhte Diffusionseigenschaften ergeben. Durch diese erfindungsgemäße Variierung der Diffusionseigenschaften der Membran 2 besteht die Möglichkeit, an besonders schweißanfälligen Bereichen des Kleidungsstücks, wie beispielsweise dem Rücken, der Brust oder den Armachseln die Membran 2 mit einer relativ geringen Dichte von Fasern 23 zu versehen, so dass in diesen stark durch Schweißanfall belasteten Körperbereichen die Membran besonders gute Diffusionseigenschaften aufweist. Dagegen kann in Körperbereichen geringeren Schweißanfalls eine höhere Dichte an Fasern 23 zur Anwendung kommen, wodurch die Diffusionseigenschaften der Membran 2 verringert sind. Folglich besteht die Möglichkeit, speziell auf die verschiedenen Körperregionen abgestimmte Bereiche der Membran 2 in dem jeweiligen Kleidungsstück vorzusehen, wodurch die Klimatisierungseigenschaften des Kleidungsstücks im Verhältnis zu bekannten mit Membranen versehenen Kleidungsstücken verbessert ist.

## Patentansprüche

1. Bekleidungsstück mit mindestens einer wasserdichten und wasserdampfdurchlässigen Membran (2), die zwischen einem Obermaterial (1) und einem Futterstoff (2) angeordnet ist, wobei
die Membran (2) aus mindestens zwei Membran-Folien (21, 22) besteht, zwischen denen Nano-Fasern (23) angeordnet sind, **dadurch gekennzeichnet, dass** die Membran (2) in stark durch Schweißanfall belasteten Körperbereichen erhöhte Diffusionseigenschaften durch eine relativ geringe Dichte von Fasern (23) aufweist und in Körperbereichen mit geringem Schweißanfall verringerte Diffusionseigenschaften durch eine höhere Dichte an Fasern (23) aufweist.

2. Bekleidungsstück nach Anspruch 1, **dadurch gekennzeichnet, dass** die Nano-Fasern (23) einen Durchmesser von 50 Nanometern aufweisen.

3. Bekleidungsstück nach Anspruch 1 oder 2, **dadurch gekennzeichnet, dass** die Nano-Fasern (23) aus Kohlenstoff bestehen.

4. Bekleidungsstück nach Anspruch 1 oder 2, **dadurch gekennzeichnet, dass** die Nano-Fasern (23) aus Polymerwerkstoffen, Metallen, Metalloxiden, Keramiken oder Glas bestehen.

5. Bekleidungsstück nach einem oder mehreren der vorstehenden Ansprüche, **dadurch gekennzeichnet, dass** zwischen den Nano-Fasern (23) Lücken (24) ausgebildet sind.

6. Bekleidungsstück nach Anspruch 5, **dadurch gekennzeichnet, dass** die Anzahl und Größe der Lücken (24) sich nach der Anzahl und Dichte der Nano-Fasern (23) richtet.

7. Bekleidungsstück nach einem oder mehreren der vorstehenden Ansprüche, **dadurch gekennzeichnet, dass** die Nano-Fasern (23) auf die Membran-Folie (21, 22) aufgestreut sind.

8. Bekleidungsstück nach einem oder mehreren der vorstehenden Ansprüche, **dadurch gekennzeichnet, dass** die Nano-Fasern (23) in die Membran-Folie (21, 22) eingesponnen sind.

## Claims

1. Apparel piece comprising at least one water-tight and water-vapour-permeable membrane (2) positioned between an outer material (1) and a lining material (3), wherein
the membrane (2) consists of at least two membrane foils (21, 22) wherebetween nanofibres (23) are positioned, **characterized in that** the membrane (2) has enhanced diffusion characteristics in particularly sweat-prone body areas due to a relatively low density of fibres (23) and reduced diffusion characteristics in body areas with less accumulation of sweat due to a higher density of fibres (23).

2. Apparel piece according to Claim 1, **characterized in that** the nanofibres (23) have a diameter of 50 nanometres.

3. Apparel piece according to Claim 1 or 2, **characterized in that** the nanofibres (23) consist of carbon.

4. Apparel piece according to Claim 1 or 2, **characterized in that** the nanofibres (23) consist of polymer materials, metals, metal oxides, ceramics or glass.

5. Apparel piece according to one or more of the preceding claims, **characterized in that** gaps (24) are formed between the nanofibres (23).

6. Apparel piece according to Claim 5, **characterized in that** the number and size of gaps (24) depends on the number and density of nanofibres (23).

7. Apparel piece according to one or more of the preceding claims, **characterized in that** the nanofibres (23) are sprinkled onto the membrane foil (21, 22).

8. Apparel piece according to one or more of the preceding claims, **characterized in that** the nanofibres (23) are spun into the membrane foil (21, 22).

## Revendications

1. Pièce d'habillement avec au moins une membrane (2) étanche à l'eau et perméable à la vapeur d'eau, qui est disposée entre un matériau de recouvrement (1) et un matériau de doublure (3), dans laquelle la membrane (2) se compose d'au moins deux feuilles de membrane (21, 22), entre lesquelles sont disposées des nano-fibres (23), **caractérisée en ce que** la membrane (2) présente, dans des zones du corps fortement soumises à la production de sueur, des propriétés de diffusion accrues par une densité relativement faible de fibres (23) et présente, dans des zones du corps avec une moindre production de sueur, des propriétés de diffusion réduites par une densité plus élevée de fibres (23).

2. Pièce d'habillement selon la revendication 1, **caractérisée en ce que** les nano-fibres (23) présentent un diamètre de 50 nanomètres.

3. Pièce d'habillement selon la revendication 1 ou 2, **caractérisée en ce que** les nano-fibres (23) sont constituées de carbone.

4. Pièce d'habillement selon la revendication 1 ou 2, **caractérisée en ce que** les nano-fibres (23) sont constituées de matériaux polymères, de métaux, d'oxydes métalliques, de céramiques ou de verre.

5. Pièce d'habillement selon une ou plusieurs des revendications précédentes, **caractérisée en ce que** des vides (24) sont formés entre les nano-fibres (23).

6. Pièce d'habillement selon la revendication 5, **caractérisée en ce que** le nombre et la grandeur des vides (24) sont adaptés au nombre et à la densité des nano-fibres (23).

7. Pièce d'habillement selon une ou plusieurs des revendications précédentes, **caractérisée en ce que** les nano-fibres (23) sont dispersées sur la feuille de membrane (21, 22).

8. Pièce d'habillement selon une ou plusieurs des revendications précédentes, **caractérisée en ce que** les nano-fibres (23) sont emmêlées dans la feuille de membrane (21, 22).
